# EUROPÄISCHE PATENTANMELDUNG

(11) **EP 2 327 591 A2**
(43) Veröffentlichungstag der Anmeldung: **01.06.2011**
(21) Anmeldenummer: 10192726.7
(22) Anmeldetag: 26.11.2010
(51) Int. Cl.: B60R 16/037

(54) **Personalisierungseinrichtung**

(30) Priorität: 27.11.2009 DE 102009055963
(71) Anmelder: Continental Automotive GmbH, 30165 Hannover (DE)
(72) Erfinder: Schmidt, Gunnar, 78052, Villingen-Schwenningen (DE); Scholten, Lutz, 52072, Aachen (DE)

## Beschreibung

Personalisierungseinrichtung

Die Erfindung bezieht sich auf eine Personalisierungseinrichtung zur Einstellung mehrerer elektrischer und/oder elektronischer Einheiten eines Kraftfahrzeugs entsprechend der in einem Speicher abgelegten Daten eines Nutzerprofils.

Derartige Personalisierungseinrichtungen dienen dazu bei Fahrzeugen, die von unterschiedlichen Fahrern benutzt werden, die elektrischen und/oder elektronischen Einheiten des Kraftfahrzeugs auf die von dem jeweiligen Fahrer gewünschten und in dessen Nutzerprofil definierten Einstellungen zu bringen.

Durch Initialisierung seines Nutzerprofils werden dann automatisch alle elektrischen und/oder elektronischen Einheiten entsprechend dem Nutzerprofil eingestellt.

Dabei können z.B. die Positionen des Fahrersitzes oder der Rückspiegel auf den Fahrer individualisiert eingestellt werden.

Zur Initialisierung des Nutzerprofils und der Einstellungen ist es bekannt eine tragbare elektronische Vorrichtung zu verwenden, die auch als Fahrzeugschlüssel dient.

Aufgabe der Erfindung ist es eine Personalisierungseinrichtung der eingangs genannten Art zu schaffen, durch die auf einfache Weise eine Initialisierung der Einstellungen der elektrischen und/oder elektronischen Einheiten entsprechend dem persönlichen Nutzerprofil eines Fahrers erfolgt.

Diese Aufgabe wird erfindungsgemäß dadurch gelöst, dass der die Daten des Nutzerprofils aufweisende Speicher auf einer einen Fahrdatenspeicher sowie einen Fahrerdatenspeicher aufweisenden personalisierten Fahrerkarte eines einen Kartenleser aufweisenden digitalen Tachographen angeordnet ist und die Daten des Nutzerprofils bei in den digitalen Tachographen eingeführter Fahrerkarte auslesbar und einer Steuereinheit zuleitbar sind, durch die die elektrischen und/oder elektronischen Einheiten entsprechend dem Nutzerprofil einstellbar ansteuerbar sind.

Die durch die Fahrerdaten im Fahrerdatenspeicher bereits auf den Fahrer personalisierte Fahrerkarte enthält somit auch bereits die Daten des Nutzerprofils, mit denen insbesondere bei einem einen digitalen Tachographen aufweisenden Nutzfahrzeug automatisch auch eine auf den Fahrer individualisierte Einstellung der elektrischen und/oder elektronischen Einheiten des Nutzfahrzeugs erfolgt, wenn die Fahrerkarte in den digitalen Tachographen eingeführt ist.

Dies ist insbesondere von Vorteil, wenn ein häufiger Wechsel der von dem Fahrer benutzen Fahrzeuge erfolgt, wie es z.B. in einem Speditionsunternehmen oder einem Busunternehmen der Fall ist.

Die gesetzlich vorgeschriebenen Fahrerdaten, die Fahrdaten und Nutzungsprofildaten befinden sich alle auf der Fahrerkarte. Diese Daten sind somit auf einem einzigen Datenträger vorhanden und damit einfach handhabbar.

Dabei werden die Daten des Nutzerprofils von dem Fahrer mit seiner Fahrerkarte immer mitgeführt.

Die Aufgabe wird weiterhin dadurch gelöst, dass in einen einen Kartenleser aufweisenden digitalen Tachographen eine einen Fahrdatenspeicher sowie einen Fahrerdatenspeicher aufweisende personalisierte Fahrerkarte einführbar ist und die Fahrdaten sowie Fahrerdaten durch den Kartenleser auslesbar sind und dass der die Daten des Nutzerprofils aufweisende Speicher in dem digitalen Tachographen oder in einer Steuereinheit angeordnet ist, wobei bei in den digitalen Tachographen eingeführter Fahrerkarte deren Personalisierung erkannt und durch die Steuereinheit die elektrischen und/oder elektronischen Einheiten entsprechend dem der Personalisierung zugeordneten Nutzerprofil einstellbar ansteuerbar sind.

Bei dieser Ausführung sind die Daten vorzugsweise einer Mehrzahl von Nutzerprofilen permanent in einem Fahrzeug vorhanden und weisen jeweils eine Personalisierung auf.

Wird nun eine ebenfalls eine Personalisierung aufweisende Fahrerkarte in den digitalen Tachographen eingeführt, wird das der Personalisierung der Fahrerkarte entsprechende personalisierte Nutzerprofil erkannt und die Einstellung der elektrischen und/oder elektronischen Einheiten entsprechend vorgenommen.

Eine Anwendung ist insbesondere bei einen digitalen Tachographen aufweisenden Nutzfahrzeugen vorteilhaft, wenn mehrere Fahrer das Fahrzeug benutzen können sollen.

Die Daten der Nutzungsprofile werden in einer Programmierungsphase manuell in den Speicher eingegeben.

Es ist aber auch möglich, dass bei in den digitalisierten Tachographen eingeführter Fahrerkarte die jeweiligen Einstellungen vorgenommen und dann mittels eines Speicherbefehls die Daten in den Speicher eingelesen werden.

In dem Speicher können die Daten einer Mehrzahl von jeweils mit einer Personalisierung versehenen Nutzerprofilen angelegt sein.

Um sowohl die Einstellungen für den jeweiligen Fahrer als auch Einstellungen für den Beifahrer vornehmen zu können, kann der digitale Tachograph zwei Kartenleser aufweisen, wobei ein erster Kartenleser dem Fahrer des Kraftfahrzeugs zugeordnet ist, entsprechend dessen Nutzerprofil die elektrischen und/oder elektronischen Einheiten einstellbar ansteuerbar sind und wobei ein zweiter Kartenleser einem Beifahrer des Kraftfahrzeugs zugeordnet ist, entsprechend dessen Nutzerprofil weitere elektrische und/oder elektronische Einheiten einstellbar ansteuerbar sind.

Bei einem Platzwechsel werden entsprechend auch die Fahrerkarten in den Kartenlesern getauscht, wodurch sich auch die Einstellung der elektrischen und/oder elektronischen Einrichtungen ändern.

Zum Einführen der Fahrerkarte kann der digitale Tachograph jedem Kartenleser zugeordnet einen Karteneinführschacht aufweisen.

Um mit einer Fahrerkarte die Einstellung der elektrischen und/oder elektronischen Einrichtungen in jedem Fahrzeugtyp vornehmen zu können, sind vorzugsweise das oder die Nutzerprofile derart im Speicher abgelegt, dass sie in einem Fahrzeug unabhängig von dem Typ des Fahrzeugs auswertbar sind.

Das oder die Nutzerprofile können Daten der Position des Fahrersitzes und/oder des Beifahrersitzes und/oder der Einstellung der Fahrzeugklimaanlage und/oder der Motorsteuerung und/oder der Einstellungen einer Anzeigeeinheit und/oder der Autoradioeinstellung und/oder der Navigationseinrichtung und/oder von Kontaktdaten und/oder der Position des Rückspiegels und/oder der Position des Lenkrades und/oder der Federkennlinien der Stoßdämpfer enthalten.

Ein Ausführungsbeispiel der Erfindung ist in der Zeichnung dargestellt und wird im Folgenden näher beschrieben. Es zeigen:
Figur 1 eine Systemdarstellung einer Personalisierungseinrichtung,
Figur 2 einen Ablaufplan der Einstellungen von elektrischen und elektronischen Einheiten durch die Personalisierungseinrichtung nach Figur 1.

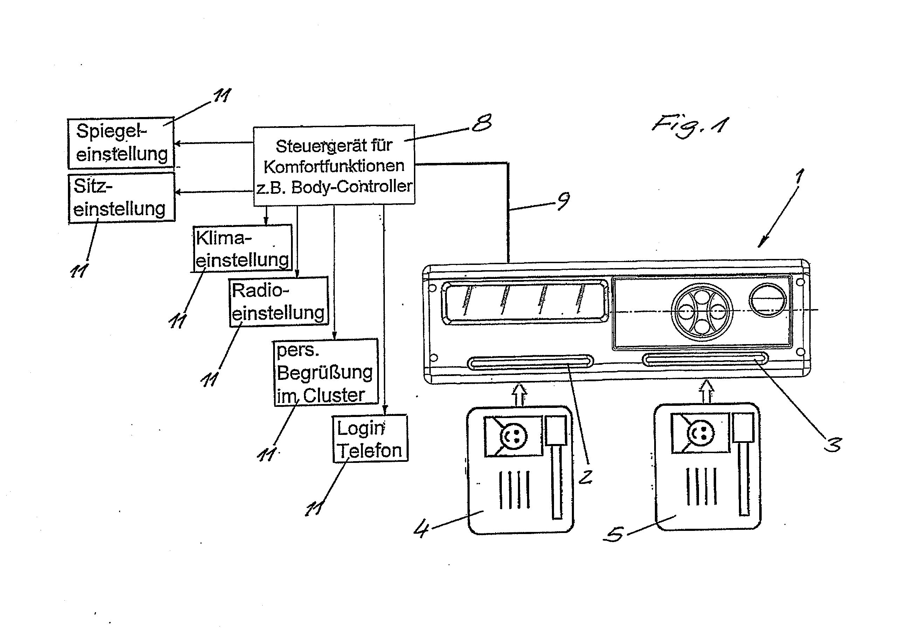

Die in Figur 1 dargestellte Personalisierungseinrichtung mit einem digitalen Tachographen 1 (DTCO) weist einen ersten Karteneinführschacht 2 und einen zweiten Karteneinführschacht 3 auf.

In den ersten Karteneinführschacht 2 ist eine Fahrerkarte 4 eines Fahrers eines Kraftfahrzeugs und in den zweiten Karteneinführschacht 3 eine weitere Fahrerkarte 5 eines Beifahrers einführbar.

In dem Tachograph ist jedem Karteneinführschacht 2 und 3 jeweils ein Kartenleser zugeordnet angeordnet.

Jede Fahrerkarte 4 und 5 weist einen Fahrdatenspeicher sowie einen Fahrerdatenspeicher auf, wobei die Fahrerdaten bei in den Tachograph eingeführter Fahrerkarte 4 und 5 durch den jeweiligen Kartenleser erfassbar sind.

Im Fahrdatenspeicher werden die erfassten Daten des Fahrbetriebs gespeichert.

Der Fahrerdatenspeicher enthält die persönlichen Daten einer bestimmten Person.

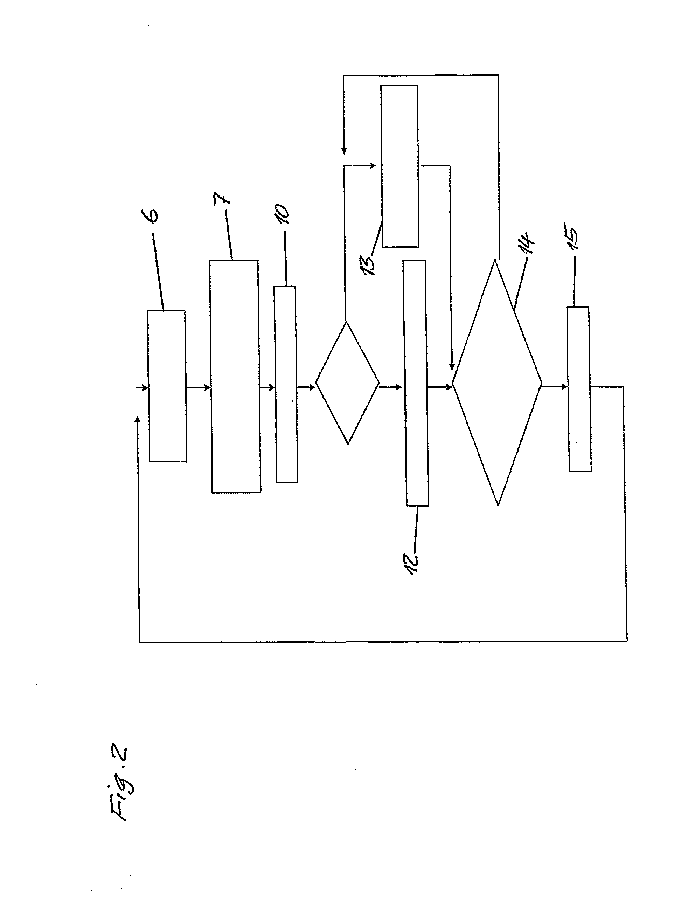

In Figur 2 ist der Funktionsablauf der Personalisierungseinrichtung dargestellt.

Die Fahrerkarte 4 wird in einem ersten Schritt 6 in den ersten Karteneinführschacht 2 eingeführt.

Durch den diesen Karteneinführschacht 2 zugeordneten Kartenleser werden in einem zweiten Schritt 7 die Fahrerdaten der

Fahrerkarte 4 erfasst und über einen CAN-Bus 9 einer Steuereinheit 8 zugeleitet.

In einem dritten Schritt 10 wird in der Steuereinheit überprüft, ob die im Fahrerdatenspeicher gespeicherten persönlichen Daten in der Steuereinheit 8 abgelegt und damit auch ein dazugehörendes Nutzerprofil gespeichert ist.

Die Daten des Nutzerprofils sind die Daten der Einstellungen einer Mehrzahl von elektrischen und elektronischen Einheiten 11 des Kraftfahrzeugs, so, wie sie von dieser bestimmten Person vorgegeben wurden.

Sind diese persönlichen Daten in der Steuereinheit 8 vorhanden, werden von der Steuereinheit 8 in einem vierten Schritt 12 die elektrischen und elektronischen Einheiten 11 angesteuert und entsprechend der Daten des Nutzerprofils eingestellt.

Stellt die Steuereinheit 8 fest, dass die im Fahrerdatenspeicher gespeicherten persönlichen Daten nicht vorhanden sind, erfolgt in einem fünften Schritt 13 ein Abspeichern der persönlichen Daten sowie der Daten der momentanen Einstellungen der Einheiten 11.

Werden bei bereits gespeichertem Nutzerprofil einzelne oder alle Einstellungen der Einheiten 11 geändert, wird dies in einem sechsten Schritt 14 erkannt und im fünften Schritt 13 gespeichert.

In einem siebten Schritt 15 erfolgt ein Warten bis zu einem Entfernen der Fahrerkarte 4 aus dem ersten Karteneinführschacht 2 und ggf. einem Einführen einer anderen Fahrerkarte in den Karteneinführschacht 2.

Die Einstellungen bei in den ersten Karteneinführschacht 2 eingeführter Fahrerkarte beziehen sich nur auf Einheiten 11, die Bezug zum Fahrersitz haben.

In Bezug auf dem Beifahrersitz zugeordneten Einheiten 11 erfolgt eine Einstellung entsprechend einem Nutzerprofil, das der in den zweiten Karteneinführschacht 3 eingeführten Fahrerkarte 5 entspricht.

Der Einstellungsablauf entspricht dem in Bezug auf den ersten Karteneinführschacht 2 beschriebenen Ablauf.

## Patentansprüche

1. Personalisierungseinrichtung zur Einstellung mehrerer elektrischer und/oder elektronischer Einheiten eines Kraftfahrzeugs entsprechend der in einem Speicher abgelegten Daten eines Nutzerprofils, **dadurch gekennzeichnet , dass** der die Daten des Nutzerprofils aufweisende Speicher auf einer einen Fahrdatenspeicher sowie einen Fahrerdatenspeicher aufweisenden personalisierten Fahrerkarte eines einen Kartenleser aufweisenden digitalen Tachographen angeordnet ist und die Daten des Nutzerprofils bei in den digitalen Tachographen eingeführter Fahrerkarte auslesbar und einer Steuereinheit zuleitbar sind, durch die die elektrischen und/oder elektronischen Einheiten entsprechend dem Nutzerprofil einstellbar ansteuerbar sind.

2. Personalisierungseinrichtung zur Einstellung mehrerer elektrischer und/oder elektronischer Einheiten eines Kraftfahrzeugs entsprechend der in einem Speicher abgelegten Daten eines Nutzerprofils, **dadurch gekennzeichnet, dass** in einen einen Kartenleser aufweisenden digitalen Tachographen (1) eine einen Fahrdatenspeicher sowie einen Fahrerdatenspeicher aufweisende personalisierte Fahrerkarte (4, 5) einführbar ist und die Fahrdaten sowie Fahrerdaten durch den Kartenleser auslesbar sind und dass der die Daten des Nutzerprofils aufweisende Speicher in dem digitalen Tachographen oder in einer Steuereinheit (8) angeordnet ist, wobei bei in den digitalen Tachographen (1) eingeführter Fahrerkarte (4, 5) deren Personalisierung erkannt und durch die Steuereinheit (8) die elektrischen und/oder elektronischen Einheiten (11) entsprechend dem der Personalisierung zugeordneten Nutzerprofil einstellbar ansteuerbar sind.

3. Personalisierungseinrichtung nach Anspruch 2, **dadurch gekennzeichnet , dass** in dem Speicher die Daten einer Mehrzahl von jeweils mit einer Personalisierung versehenen Nutzerprofilen abgelegt sind.

4. Personalisierungseinrichtung nach einem der vorhergehenden Ansprüche, **dadurch gekennzeichnet, dass** der digitale Tachograph (1) zwei Kartenleser aufweist, wobei ein erster Kartenleser dem Fahrer des Kraftfahrzeugs zugeordnet ist, entsprechend dessen Nutzerprofil die elektrischen und/oder elektronischen Einheiten (11) einstellbar ansteuerbar sind und wobei ein zweiter Kartenleser einem Beifahrer des Kraftfahrzeugs zugeordnet ist, entsprechend dessen Nutzerprofil weitere elektrische und/oder elektronische Einheiten (11) einstellbar ansteuerbar sind.

5. Personalisierungseinrichtung nach Anspruch 4, **dadurch gekennzeichnet , dass** der digitale Tachograph (1) jedem Kartenleser zugeordnet einen Karteneinführschacht (2, 3) aufweist.

6. Personalisierungseinrichtung nach einem der vorhergehenden Ansprüche, **dadurch gekennzeichnet, dass** das oder die Nutzerprofile derart im Speicher abgelegt sind, dass sie in einem Fahrzeug unabhängig von dem Typ des Fahrzeugs auswertbar sind.

7. Personalisierungseinrichtung nach einem der vorhergehenden Ansprüche, **dadurch gekennzeichnet, dass** das oder die Nutzerprofile Daten der Position des Fahrersitzes und/oder des Beifahrersitzes und/oder der Einstellung der Fahrzeugklimaanlage und/oder der Motorsteuerung und/oder der Einstellungen einer Anzeigeeinheit und/oder der Autoradioeinstellung und/oder der Navigationseinrichtung und/oder von Kontaktdaten und/oder der Position des Rückspiegels und/oder der Position des Lenkrades und/oder der Federkennlinien der Stoßdämpfer enthält.
